# EUROPÄISCHE PATENTSCHRIFT

(11) **EP 3 522 704 B1**
(45) Veröffentlichungstag und Bekanntmachung des Hinweises auf die Patenterteilung: **28.07.2021**
(21) Anmeldenummer: 17780688.2
(22) Anmeldetag: 29.09.2017
(51) Int. Cl.: A01M 1/02, A01M 7/00, A01M 21/00

(54) **IDENTIFIZIERUNG VON NÜTZLINGEN UND/ODER SCHADSTOFFEN IN EINEM FELD FÜR KULTURPFLANZEN**
IDENTIFICATION OF BENEFICIAL INSECTS AND/OR POLLUTANTS IN A FIELD FOR CROP PLANTS
IDENTIFICATION D'ORGANISMES UTILES ET/OU DE SUBSTANCES NOCIVES DANS UN CHAMP DE PLANTES CULTIVÉES

(30) Priorität: 07.10.2016 EP 16192826
(43) Veröffentlichungstag der Anmeldung: 14.08.2019
(60) Teilanmeldung: 21180056.0
(73) Patentinhaber: BASF Agro Trademarks GmbH, 67063 Ludwigshafen am Rhein (DE)
(72) Erfinder: PETERS, Ole, 40764 Langenfeld (DE); JOHNEN, Andreas, 48147 Münster (DE); TACKENBERG, Maria, 48147 Münster (DE)
(74) Vertreter: BASF IP Association
(86) Internationale Anmeldenummer: PCT/EP2017/074778
(87) Internationale Veröffentlichungsnummer: WO 2018/065308

(56) Entgegenhaltungen:
- WO-A1-02/088700
- WO-A1-2012/054397
- WO-A1-2015/132208
- WO-A2-2014/035993
- US-A1- 2013 011 011

## Beschreibung

Die vorliegende Erfindung befasst sich mit der Identifizierung von Nützlingen und/oder Schadorganismen in einem Feld für Kulturpflanzen.

In der modernen Landwirtschaft spielt die automatisierte Erfassung und Erkennung von Nützlingen und/oder Schadorganismen innerhalb von landwirtschaftlich genutzten Flächen eine zunehmend wichtige Rolle. Eine wichtige Aufgabe besteht zum Beispiel darin, nützliche Pollenspender von Schadinsekten zu unterscheiden.

Eine weitere wichtige Aufgabe besteht darin, zu erkennen, ob bei Anwesenheit eines Schadorganismus im Feld eine Schadschwelle überschritten ist. Die Schadschwelle gibt die Befallsdichte mit Schadorganismen an, ab der eine Bekämpfung wirtschaftlich sinnvoll wird. Bis zu diesem Wert ist der wirtschaftliche Mehraufwand durch eine Bekämpfung größer als der zu befürchtende Ernteausfall. Übersteigt der Befall diesen Wert, werden die Bekämpfungskosten durch den zu erwartenden Mehrertrag zumindest ausgeglichen.

Je nach dem Wesen eines Schädlings kann die Schadschwelle sehr unterschiedlich sein. Bei Schädlingen, die nur mit großem Aufwand und mit negativen Begleiterscheinungen für die weitere Produktion zu bekämpfen sind, kann die Schadschwelle sehr hoch sein. Kann jedoch schon ein geringer Befall zu einem Ausbreitungsherd werden, der die gesamte Produktion zu vernichten droht, kann die Schadschwelle sehr niedrig sein.

Zu beachten ist, dass der Zeitpunkt der Überschreitung der Schadschwelle bei vielen Schädlingen nicht genau dem optimalen Zeitpunkt für die Bekämpfungsmaßnahmen entspricht. Die Bekämpfungsschwelle liegt oft unterhalb der wirtschaftlichen Schadschwelle, da eine gewisse Zeit vergehen kann, bis ein appliziertes Pflanzenschutzmittel seine Wirkung entfaltet.

Die wichtigste Voraussetzung, um die Schad- und/oder Bekämpfungsschwelle erkennen zu können, ist eine effiziente Befallskontrolle.

Zur Befallskontrolle in Bezug auf Schadinsekten werden beispielsweise beleimte Farbtafeln oder Gelbfangschalen verwendet. Viele Schädlinge wie beispielsweise Rapsschädlinge werden von der gelben Farbe der Schale oder Tafel angelockt. Die Gelbfangschale ist mit Wasser gefüllt, dem ein Tensid beigefügt wurde, um die Oberflächenspannung zu erniedrigen, so dass angelockte Schädlinge ertrinken. Im Fall der beleimten Tafel bleiben die Schädlinge am Leim kleben.

Das manuelle Aufstellen und Kontrollieren von Fallen ist allerdings mühsam und zeitaufwändig. WO2014/035993A2 offenbart ein automatisiertes System, mit dem Moskitos angelockt werden, um Speichelproben zu nehmen. Die Speichelproben werden analysiert, um die Moskito-Spezies zu identifizieren. Das System ist vergleichsweise teuer. Zudem hat die Verwendung von Lockmitteln den Nachteil, dass Einfluss auf die angelockten Organismen genommen wird und unklar ist, ob die Organismen auch von sich aus in den Bereich der Falle gelangt wären. Eine Ermittlung von Befallsdichten wird durch die Verwendung von Lockmitteln erschwert, da der Einfluss des Lockmittels ermittelt werden muss.

Mittels LiDAR (light detection and ranging) können Fluginsekten in ihrer natürlichen Umgebung detektiert und identifiziert werden. Der Flügelschlag der Insekten führt zu einer Modulation des rückgestreuten Laserlichts, so dass ein Insekt beispielsweise anhand des charakteristischen Flügelschlags identifiziert werden kann.

Mikkel Brydegaard et al. beschreiben ein LiDAR-System zur Identifikation von Fluginsekten, das auf dem so genannten Scheimpflug-Prinzip basiert (Super Resolution Laser Radar with Blinking Atmospheric Particles - Application to Interacting Flying Insects, Progress In Electromagnetics Research Vol. 147, 141-151, 2014). David S. Hoffmann et al. beschreiben ein LiDAR-System zur Erkennung von Honigbienen (Range-resolved optical detection of honeybees by use of wing-beat modulation of scattered light for locating land mines, APPLIED OPTICS, Vol. 46, No. 15, 2007).

Obwohl die Technik zunehmend besser wird (Carsten Kirkeby et al., Observations of movement dynamics of flying insects using high resolution lidar, Scientific Reports | 6:29083 | DOI: 10.1038/srep29083), gelingt die Identifizierung von einzelnen Spezies in natürlicher Umgebung derzeit noch nicht ausreichend genau.

Neben der Identifizierung von Schadinsekten gibt es auch andere Schadorganismen wie Pilze und Krankheitserreger, die automatisch zu erkennen und für die eine Befallsdichte zu ermitteln ist. Hyperspektral-Sensoren können eingesetzt werden, um aus den Reflexionseigenschaften von Vegetation und Bodenformationen Aussagen über den Gesundheitsstatus von Kulturpflanzen abzuleiten. Anne-Kartin Mahlein et al. verwendeten Hyperspektral-Sensoren zur Erkennung von Zuckerrübenkrankheiten (Hyperspectral imaging for small-scale analysis of symptoms caused by different sugar beet diseases; Plant Methods 2012, 8:3; doi: 10.1186/1746-4811-8-3).

In dem Artikel Plant Disease Detection by Imaging Sensors - Parallels and Specific Demands for Precision Agriculture and Plant Phenotyping Plant Disease, Februar 2016, Volume 100, Number 2 Pages 241-251; http://dx.doi.org/10.1094/PDIS-03-15-0340-F) sind weitere Methoden zusammengefasst, um Pflanzenkrankheiten detektieren zu können, ebenso wie in den Dokumenten WO 2012/054397 A1, WO 02/088700 A1 und WO 2015/132208 A1.

Nachteilig an allen bekannten Erkennungstechnologien ist jedoch, dass sie in der Praxis ungenau sind. Häufig lassen sich einzelne Schädlinge nicht hinreichend spezifizieren. Die Erkennung von Schädlingen in sehr geringer Anzahl oder in einem sehr frühen Entwicklungsstadium geben zwar Informationen über das Vorhandensein dieser Schädlinge, eine ausreichende Differenzierung, wie sie für die Festlegung von Schadschwellen, eine Auswahl von Pflanzenschutzmitteln oder andere Maßnahmen nötig ist, wird hingegen nicht erreicht.

Es besteht damit der Bedarf, die Aussagekraft von Sensoren zur Identifizierung von Schadorganismen zu erhöhen.

Erfindungsgemäß wird diese Aufgabe durch die Gegenstände der unabhängigen Ansprüche 1, 13 und 14 gelöst. Bevorzugte Ausführungsformen finden sich in den abhängigen Ansprüchen und in der vorliegenden Beschreibung.

Die Erfindung wird nachstehend näher erläutert, ohne zwischen den Erfindungsgegenständen (Verfahren, System, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, System, Computerprogrammprodukt) sie erfolgen.

In einem ersten Schritt des erfindungsgemäßen Verfahrens wird eine zu identifizierende Spezies in einem Feld, in dem Kulturpflanzen angebaut werden, mit einem Sensor oder mit mehreren Sensoren detektiert.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.

Unter dem Begriff "zu identifizierende Spezies" wird eine Spezies verstanden, die noch nicht hinreichend genau spezifiziert worden ist, um eine Aussage darüber zu treffen, ob diese Spezies für die Kulturpflanzen nützlich, schädlich oder unbedeutend ist und/oder ob Maßnahmen getroffen werden müssen, um die Zahl der Spezies in dem Feld zu erhöhen oder zu erniedrigen.

Unter dem Begriff "Detektion einer Spezies" wird die Erfassung der Anwesenheit der Spezies verstanden. Die Detektion der Spezies ist ein erster Schritt zur ihrer Identifikation.

Unter dem Begriff "Spezies" wird ein Organismus verstanden, der beim Anbau von Kulturpflanzen in einem Feld in Erscheinung treten kann. Bei der Spezies kann es sich um einen Nützling handeln. Ein Beispiel für einen Nützling ist ein Pollenspender (Bestäuber). Bei der Spezies kann es sich aber auch um einen Schadorganismus handeln.

Unter einem "Schadorganismus" oder auch kurz "Schädling" wird ein Organismus verstanden, der beim Anbau von Kulturpflanzen in Erscheinung treten und die Kulturpflanze schädigen, die Ernte der Kulturpflanze negativ beeinflussen oder mit der Kulturpflanze um natürliche Ressourcen konkurrieren kann. Beispiele für derartige Schadorganismen sind Unkräuter, Ungräser, tierische Schädlinge wie beispielsweise Käfer, Raupen und Würmer, Pilze und Krankheitserreger (z.B. Bakterien und Viren). Auch wenn Viren aus biologischer Sicht nicht zu den Organismen zählen, sollen sie dennoch vorliegend unter den Begriff Schadorganismus fallen.

Unter dem Begriff "Sensor" wird eine Vorrichtung verstanden, mit der die Anwesenheit der zu identifizierenden Spezies in dem Feld für Kulturpflanzen registriert werden kann. Dieser Sensor wird nachfolgend auch als "Spezies-Sensor" bezeichnet.

Der Sensor erfasst die Anwesenheit einer Spezies anhand eines oder mehrerer charakteristischer Signale. Die Signale können direkt von der Spezies selbst ausgesandt werden. Ein Beispiel für ein solches direkt ausgesandtes Signal ist beispielsweise das Geräusch, das viele Fluginsekten beim Fliegen durch den Flügelschlag erzeugen. Ebenso kann der Sensor ein Signal aussenden, das von der zu identifizierenden Spezies in charakteristischer Weise geändert und zurückgesandt wird. Ein Beispiel für ein solches geändertes, zurückgesandtes Signal ist die Modulation eines Laserstrahls durch die charakteristischen Flügelbewegungen eines Flugobjekts. Ein Sensor erfasst üblicherweise elektromagnetische und/oder akustische und/oder chemische und/oder elektrische Signale und/oder andere Signale, die auf die Anwesenheit einer Spezies hindeuten.

Bei dem Sensor kann es sich um einen Sensor handeln, der die zu identifizierende Spezies direkt erfasst oder indirekt erfasst. Bei einer direkten Erfassung führt die Anwesenheit der Spezies zu einem Signal, das vom Sensor registriert wird; bei einer indirekten Erfassung führt die Anwesenheit der Spezies zu einer Veränderung in der Umgebung der Spezies, die vom Sensor registriert wird. Als ein Beispiel für eine direkte Erfassung sei ein Fluginsekt genannt, das sich in und/oder über dem Feld bewegt und dessen Bewegung von einem Sensor registriert wird. Als ein Beispiel für eine indirekte Erfassung sei eine Krankheit angeführt, die Veränderungen an der Kulturpflanze wie beispielsweise eine Verfärbung der Blätter hervorruft. Die Verfärbung der Blätter wird mittels eines Sensors registriert und deutet damit indirekt auf die Anwesenheit eines Krankheitserregers hin.

In einer Ausführungsform arbeitet der Sensor automatisch, d.h. ein Eingriff eines Menschen ist nicht erforderlich, damit von dem Sensor die Anwesenheit der Spezies registriert wird.

In einer alternativen Ausführungsform wird der Sensor durch einen Nutzer bedient.

Der Sensor kann ein Teil einer stationären Vorrichtung sein, die im, am und/oder über dem Feld stationiert ist und einen Teil des Feldes oder das gesamte Feld überwacht.

Denkbar ist auch, dass der Sensor ein Teil einer mobilen Vorrichtung ist, die ein Nutzer im Feld mit sich führen kann. Denkbar ist auch, dass der Sensor an einer Landmaschine angebracht ist und Signale aufnimmt, wenn sich die Landmaschine im Feld bewegt. Auch der Einsatz eines bemannten oder unbemannten Fluggeräts, an dem der Sensor angebracht ist und Signale aufnimmt, wenn sich das Fluggerät über dem Feld bewegt, ist denkbar.

Der Sensor kann kontinuierlich Signale in seinem Erkennungsbereich erfassen. Es ist aber auch denkbar, dass der Sensor zu definierbaren Zeitpunkten und/oder in definierbaren Zeitspannen Signale registriert. Denkbar ist ferner, dass der Sensor durch einen Auslöser (Trigger) zur Erfassung von Signalen angestoßen wird. Dieser Auslöser kann den Sensor beispielsweise dann zur Erfassung von Signalen veranlassen, wenn ein bestimmtes, vorher definiertes Ereignis eingetreten ist, wie beispielsweise das Auftreten einer Bewegung in der Nähe des Sensors, das Erreichen einer definierten Helligkeit (oder Dunkelheit), das Einsetzen von Niederschlag, eine bestimmte Luftfeuchte oder Temperatur oder dergleichen. Es ist aber auch denkbar, dass ein Nutzer den Sensor auslöst.

Denkbar ist auch, dass es sich um mehrere Sensoren handelt. Die Sensoren können vom selben Typ sein, denkbar ist auch der Einsatz von Sensoren unterschiedlichen Typs.

Nachfolgend werden einige Typen von bevorzugten Sensoren beschrieben.

In einer bevorzugten Ausführungsform handelt es sich um einen optischen Sensor, d.h. bei den vom Sensor erfassten Signalen handelt es sich um optische Signale, das heißt um elektromagnetische Strahlung im Bereich des sichtbaren und/oder des ultravioletten und/oder des infraroten Lichts. Beispiele für optische Sensoren sind RGB-Sensoren, LiDAR-Sensoren, Hyperspektral-Sensoren und thermografische Sensoren.

Bei dem Sensor kann es sich beispielsweise um einen digitalen Bildsensor für sichtbares Licht handeln, mit dem beispielsweise RGB-Bilder eines Teils des Feldes aufgenommen werden können. Digitale Bildaufnahmen von Pflanzen und/oder Pflanzenteilen sind bereits in der Vergangenheit zur Detektion und Quantifizierung von Krankheiten verwendet worden (C.H. Bock et al., Plant disease severity estimated visually, by digital photography and image analysis, and by hyperspectral imaging, Crit. Rev. Plant Sci. 2010, 29: 59-107; M. Neumann et al.: Erosion band features for cell phone image based plant disease classificaton, Proceedings of the 22nd International Conference on pattern Recognition (ICPR), Stockholm, Sweden, 24-28 August 2014, Seiten 3315-3320).

Anstelle von RGB-Aufnahmen können selbstverständlich auch digitale Bildaufnahmen erzeugt werden, die von anderen Farbräumen als dem RGB-Farbraum Gebrauch machen (CIELUV, CIELAB, YUV, HSV u.a.).

In einer bevorzugten Ausführungsform ist der Bildsensor Teil einer mobilen Vorrichtung, die von einem Nutzer im Feld mitgeführt wird. Bei der mobilen Vorrichtung kann es sich beispielsweise um ein Smartphone, ein Tabletcomputer oder eine Digitalkamera handeln, mit dem der Nutzer digitale Bildaufnahmen von zu identifizierenden Spezies und/oder Pflanzenteilen aufnimmt.

Bei dem Sensor kann es sich auch um einen bildgebenden Hyperspektral-Sensor handeln. Dieser erfasst beispielsweise die Kulturpflanze und kann aufgrund von Änderungen im reflektierten Spektrum der Kulturpflanze gegenüber einer gesunden Kulturpflanze einen Befall mit einem Schadorganismus erkennen (A.-K. Mahlein et al.: Recent advances in sensing plant diseases for precision crop protection, Eur. J. Plant Pathol. 133 (2012) 197-209; T. Mewes et al.: Spectral requirements on airborne hyperspectral remote sensing data for wheat disease detection, Precis. Agric. 12 (2011) 795-812; E.-C. Oerke et al.: Proximal sensing of plant diseases, Detection of Plant Pathogens, Plant Pathology in the 21st Century, edited by M. L. Gullino et al., Springer Science and Business Media, Dordrecht (NL) 2014, Seiten 55-68).

Bei dem Sensor kann es sich auch um einen bildgebenden thermografischen Sensor handeln. Thermografie ermöglicht z.B. die Visualisierung von Unterschieden in der Oberflächentemperatur von Pflanzenteilen. Die Temperatur von Pflanzenteilen (insbesondere Blättern) wird durch Umweltfaktoren und Kühlung infolge von Transpiration bestimmt. Einige Pflanzen sind in der Lage, ihre Temperatur über die Umgebungstemperatur anzuheben (thermogenische Pflanzen). Mit Schadspezies befallene Pflanzen können Abweichungen in der Oberflächentemperatur gegenüber gesunden Pflanzen aufweisen (E.-C. Oerke et al.: Thermal imaging of cucmber leaves affected by milde wand environmental conditions, J. Exp. Bot. 57 (2006) 2121-2132; E.-C. Oerke et al.: Thermographic assessment of scab disease on apple leaves, Prec. Agric. 12 (2011) 699-715). Somit kann mit einem thermografischen Sensor die Anwesenheit eines Krankheitserregers indirekt erfasst werden.

Bei dem Sensor kann es sich auch um einen bildgebenden Fluoreszenzsensor handeln. Damit können z.B. Unterschiede in der photosynthetischen Aktivität von Pflanzen sichtbar gemacht werden (E. Bauriegel et al.: Chlorophyll fluorescence imaging to facilitate breeding of Bremia lactucae-resistant lettuce cultivars, Comput. Electron. Agric. 105 (2014) 74-82; S. Konanz et al.: Advanced multi-color fluorescence imaging system for detection of biotic and abiotic stresses in leaves, Agriculture 4 (2014) 79-95). Unterschiede in der photosynthetischen Aktivität können auf die Anwesenheit eines Krankheitserregers hindeuten.

Bei dem Sensor kann es sich auch um einen LiDAR-Sensor handeln. Dabei werden Lichtsignale ausgesendet, die von Objekten rückgestreut werden. Anhand der rückgestreuten Signale lässt sich die Anwesenheit einer Spezies feststellen. LiDAR eignet sich insbesondere zur Detektion von Fluginsekten (Mikkel Brydegaard et al.: Super Resolution Laser Radar with Blinking Atmospheric Particles - Application to Interacting Flying Insects, Progress In Electromagnetics Research Vol. 147, 141-151, 2014; David S. Hoffmann et al.: Range-resolved optical detection of honeybees by use of wing-beat modulation of scattered light for locating land mines, APPLIED OPTICS, Vol. 46, No. 15, 2007; Carsten Kirkeby et al., Observations of movement dynamics of flying insects using high resolution lidar, Scientific Reports | 6:29083 | DOI: 10.1038/srep29083).

Bei dem Sensor kann es sich auch um ein Mikrofon handeln. Mit dem Mikrofon werden Geräusche und/oder Laute, die von der Spezies erzeugt werden, erfasst. Anhand der Geräusche und/oder Laute lässt sich die Anwesenheit einer Spezies feststellen *(*Detecting Insect Flight Sounds in the Field: Implications for Acoustical Counting ofMosquitoes, Transactions of the ASABE, 2007, Vol. 50(4): 1481-1485).

Bei dem Sensor kann es sich auch um einen Sensor für chemische Stoffe in der Luft handeln, wie beispielsweise einen Gaschromatografen (GC) oder ein Massenspektromer (MS) oder eine GC/MS-Kombination. Damit können Substanzen detektiert werden, die von Pflanzen als Reaktion auf einen Befall mit einem Schadorganismus abgegeben werden (G. Witzany: Plant Communication from Biosemiotic Perspective, Plant Signal Behav. 2006 Jul-Aug; 1(4): 169-178; Signaling and Communication in Plant, Series Ed.: C. Garcia-Mata, Springer ISSN: 1867-9048).

Denkbar ist auch der Einsatz von mehreren der genannten oder weiteren Sensoren nebeneinander und/oder die Verwendung von Sensoren, in denen mehrere Erfassungstechnologien kombiniert sind, wie beispielsweise ein Raman-LiDAR-Sensor oder ein Fluorezenz-LiDAR-Sensor (WO2013017860A1).

In einem weiteren Schritt des erfindungsgemäßen Verfahrens wird mindestens ein Speziesvorschlag für die detektierte, zu identifizierende Spezies generiert.

Dies erfolgt üblicherweise nach einer Analyse des Signals, das der Sensor infolge der Anwesenheit der Spezies erfasst hat. Dazu kann der Sensor mit einem Computersystem verbunden sein, das das vom Sensor erfasste Signal analysiert, um dann anhand von charakteristischen Merkmalen des Signals mindestens einen Vorschlag zu generieren, um welche Spezies es sich bei der zu identifizierenden Spezies handeln könnte.

Ist der Sensor beispielsweise ein Bildsensor, der eine digitale Bildaufnahme von der zu identifizierenden Spezies erzeugt hat, kann die digitale Bildaufnahme einer Bildanalyse auf dem Computersystem unterzogen werden. Die direkte Erkennung von Spezies durch eine Analyse von Bildern gehört zum Stand der Technik (siehe z.B. US20130011011A1, J. Wang et al.: A new automatic identification system of insect images at the order level, Knowledge-Based Systems, Vol. 33, 2012, 102-110). Analoges gilt für die indirekte Erkennung der Spezies; auch Bildaufnahmen von Krankheitssymptomen einer Pflanze können einer Bildanalyse unterzogen werden, um Krankheiterreger zu erkennen (S.J. Pethybridge at al., Leaf doctor: a new portable application for quantifying plant disease severity, Plant Dis 99 (2015) 1310-1316).

Wie oben erläutert, sind die vom Sensor erfassten Signale üblicherweise nicht so deutlich, dass sich anhand eines Signals eine Spezies eindeutig zuordnen lässt. Üblicherweise kommen mehrere Spezies in Betracht. Dementsprechend werden mehrere Vorschläge generiert, um welche Spezies es sich handeln könnte. Denkbar ist aber auch, dass mittels der vorliegenden Erfindung eine Bestätigung für eine Vermutung der anwesenden Spezies eingeholt werden soll; in diesem Fall wird nur ein Vorschlag generiert, der dann zu verifizieren oder zu falsifizieren ist.

Insofern wird mindestens ein Vorschlag generiert, um welche Spezies es sich bei der vom Sensor (direkt oder indirekt) erfassten Spezies handeln könnte.

In einem weiteren Schritt des erfindungsgemäßen Verfahrens wird berechnet, mit welcher Wahrscheinlichkeit es sich bei der detektierten Spezies um die mindestens eine vorgeschlagene Spezies handelt. Wurden mehrere Vorschläge generiert, wird für jeden einzelnen Vorschlag die entsprechende Wahrscheinlichkeit berechnet.

In diese Berechnung fließt die mindestens eine vorgeschlagene Spezies ein. Zusätzlich fließen Informationen darüber ein, wo die detektierte Spezies detektiert worden ist. Dazu kann der Standort des Sensors oder der Ort, an dem sich die Spezies zum Zeitpunkt der Detektion befunden hat, verwendet werden. In der Regel werden die beiden genannten Orte nicht weit auseinander liegen, so dass es für die vorliegende Erfindung in der Regel nicht von Belang sein wird, welcher der genannten Orte in die Berechnung einfließt. Bei vergleichsweise langreichweitigen Sensoren wie LiDAR kann es jedoch einen Unterschied machen.

Wenn es einen Unterschied machen kann, sollte derjenige Ort, an dem sich die zu identifizierende Spezies zum Zeitpunkt der Detektion aufgehalten hat, verwendet werden, da es bei der Berechnung der Wahrscheinlichkeit darum geht, zu ermitteln, wie wahrscheinlich es generell ist, dass die vorgeschlagene Spezies zum Detektionszeitpunkt an dem Ort der Detektion auftritt.

Die Ermittlung des Ortes erfolgt üblicherweise mit einem GPS-Sensor oder einem vergleichbaren Sensor. Üblicherweise befindet sich ein GPS-Sensor in der unmittelbaren Nähe des Sensors zur Erfassung der Anwesenheit einer zu detektierenden Spezies (Spezies-Sensor). Vorzugsweise sind der Spezies-Sensor und der GPS-Sensor Bestandteile derselben Vorrichtung. Denkbar ist z.B., dass ein Smartphone eingesetzt wird, das neben einem Bildsensor zur Aufnahme digitaler Bilder einen GPS-Sensor umfasst.

Es ist aber auch denkbar, dass der Ort nicht extra ermittelt werden muss sondern bereits bekannt ist, z.B. weil es sich bei dem Sensor um einen stationären Sensor handelt, der an einer bekannten Position aufgestellt worden ist. Es ist auch denkbar, dass der Sensor über eine Identifikationsnummer verfügt, die er bei der Übermittlung von Daten an ein externes Computersystem übermittelt. Anhand der übermittelten Identifikationsnummer lässt sich dann beispielsweise auch der Standort des Sensors aus einer Datenbank ermitteln.

In die Berechnung der Wahrscheinlichkeit fließt ferner der Zeitpunkt der Detektion der zu identifizierenden Spezies ein. Es kann für die Anwesenheit einer Spezies einen Unterschied machen, ob es Frühling, Sommer, Herbst oder Winter ist, denn einige Spezies treten nur in bestimmten Jahreszeiten auf. Es kann einen Unterschied machen, ob es Tag oder Nacht ist, denn einige Spezies treten nur zu einer bestimmten Tages- oder Nachtzeit auf. Insofern wird vorzugsweise der Zeitpunkt der Detektion auf mindestens die Stunde genau inklusive des Datums ermittelt und für die Berechnung eingesetzt.

Ist eine zu identifizierende Spezies mit mindestens einem Sensor detektiert worden und ist der Standort des mindestens einen Sensors und/oder der Aufenthaltsort der zu identifizierenden Spezies zum Zeitpunkt der Detektion ermittelt worden und ist der Zeitpunkt der Detektion ermittelt und ist mindestens ein Vorschlag generiert worden, um welche Spezies es sich bei der zu identifizierenden Spezies handeln könnte, wird in einem weiteren Schritt des erfindungsgemäßen Verfahrens berechnet, mit welcher Wahrscheinlichkeit es sich bei der detektierten Spezies um die mindestens eine vorgeschlagene Spezies handelt.

Es wird berechnet, wie wahrscheinlich es ist, dass zum Zeitpunkt der Detektion an dem Ort der Detektion eine solche vorgeschlagene Spezies auftritt.

Zur Berechnung der Wahrscheinlichkeit wird ein Modell eingesetzt. Solche Modelle sind im Stand der Technik beschrieben und sie sind kommerziell verfügbar (Newe M., Meier H., Johnen A., Volk T.: proPlant expert.com - an online consultation system on crop protection in cereals, rape, potatoes and sugarbeet. EPPO Bulletin 2003, 33, 443-449; Johnen A., Williams I.H., Nilsson C., Klukowski Z., Luik A., Ulber B.: The proPlant Decision Support System: Phenological Models for the Major Pests of Oilseed Rape and Their Key Parasitoids in Europe, Biocontrol-Based Integrated Management of Oilseed Rape Pests (2010) Ed.: Ingrid H. Williams. Tartu 51014, Estonia. ISBN 978-90-481-3982-8. p. 381 - 403; www.proPlantexpert.com).

Neben dem Ort der Detektion und dem Zeitpunkt der Detektion fließen weitere Parameter, die einen Einfluss auf die Anwesenheit der vorgeschlagenen Spezies ausüben, in die Berechnung der Wahrscheinlichkeiten ein.

Beispiele dieser weiteren Parameter sind Parameter zur Kulturpflanze (Entwicklungsstadium, Wachstumsbedingungen, Pflanzenschutzmaßnahmen) und zur Witterung (Temperatur, Sonnenscheindauer, Windgeschwindigkeit, Niederschlag).

Weitere Parameter beziehen sich auf Umweltbedingungen, die am Ort der Detektion herrschen, wie beispielsweise Bodentyp und Vegetation im Umfeld.

Weitere Parameter beziehen sich auf die vorgeschlagene Spezies wie ökonomische Grenzwerte, Schädlings-/Krankheitsdruck und Auftreten von Spezies in der Umgebung.

Die genannten Parameter werden für den Zeitpunkt der Detektion und für den Ort der Detektion erhoben. Neben oder anstelle des punktuellen zeitlichen Werts können auch der Tagesdurchschnittswert und/oder der Wochendurchschnittswert von Interesse sein.

Auch die Historie der genannten Parameter kann von Interesse sein. Es ist beispielsweise denkbar, dass es sich bei der zu identifizierenden Spezies um einen Schadorganismus handelt, der stabile Nester bildet. Die Nester werden in der Regel über eine Vegetationsperiode der Kulturpflanze hinaus beobachtet. Ein Beispiel stellt das Acker-Fuchsschwanzgras (Alopecurus myosuroides Huds) dar, welches eine Samenverbreitung nahe der Mutterpflanze aufweist. Hierbei sind die Unkrautnester stabil bzw. wiederkehrend; es können allerdings auch neue hinzukommen.

Mit Hilfe der oben genannte Parameter lässt sich ein Befallsrisiko abschätzen. Je mehr Daten verfügbar sind, desto präziser ist die Vorhersage.

Die berechnete Wahrscheinlichkeit kann einem Nutzer gegenüber angezeigt werden. In einer Ausführungsform der vorliegenden Erfindung wird einem Nutzer der mindestens eine Speziesvorschlag zusammen mit der berechneten Wahrscheinlichkeit, dass es sich bei der detektierten Spezies um den Speziesvorschlag handelt, angezeigt. Die Anzeige kann beispielsweise auf einem Monitor oder Display mittels Text und/oder Symbolen erfolgen. Denkbar ist auch die Ausgabe einer Sprachnachricht.

Die berechnete Wahrscheinlichkeit kann verwendet werden, um die generierten Speziesvorschläge zu bewerten. Wurden beispielsweise drei Speziesvorschläge generiert und es wurden drei unterschiedliche Wahrscheinlichkeiten berechnet, können anhand der Wahrscheinlichkeiten die Möglichkeiten, um welche Spezies es sich denn nun handelt, reduziert werden; im besten Fall bleibt eine Möglichkeit übrig. Wurde nur ein Vorschlag generiert (Verifikation), kann anhand der berechneten Wahrscheinlichkeit eine Aussage getroffen werden, ob der Vorschlag eher richtig oder eher falsch ist.

In einer Ausführungsform werden einem Nutzer ein oder mehrere Speziesvorschläge optional mit der entsprechenden berechneten Wahrscheinlichkeit angezeigt, die oberhalb einer Mindestwahrscheinlichkeit liegen. Es ist zum Beispiel denkbar, dass nur diejenigen Speziesvorschläge angezeigt werden, für die die berechnete Wahrscheinlichkeit zum Beispiel mindestens 60% beträgt.

Die Aussagekraft eines Sensors zur Erfassung der Anwesenheit einer Spezies wird durch die vorliegende Erfindung somit erhöht.

Die berechnete Wahrscheinlichkeit kann ferner dazu verwendet werden, den Sensor und/oder die Mittel zur Generierung des mindestens einen Speziesvorschlags zu optimieren. In einer bevorzugten Ausführungsform fließen daher die ermittelten Wahrscheinlichkeiten in das System, das den Sensor und/oder die Mittel zur Generierung des mindestens einen Speziesvorschlags zurück. Insbesondere dann, wenn es sich bei den Mitteln zur Generierung des mindestens einen Speziesvorschlags um ein selbstlernendes System handelt, können die berechneten Wahrscheinlichkeiten verwendet werden, um die Vorhersagefähigkeit des selbstlernenden Systems zu erhöhen.

Die berechnete Wahrscheinlichkeit kann ferner dazu verwendet werden, um eine Handlungsempfehlung zu geben. Ist eine Spezies detektiert worden und ist mittels der vorliegenden Erfindung ermittelt worden, dass es sich bei der detektierten Spezies mit hoher Wahrscheinlichkeit um einen Schadorganismus handelt, können entsprechende Maßnahmen eingeleitet werden, um den Schadorganismus zu bekämpfen. Einem Nutzer kann eine solche Handlungsempfehlung angezeigt werden.

Das vorliegende Verfahren kann ganz oder teilweise von einem Computersystem ausgeübt werden. Ein solches Computersystem kann ein einzelner Computer sein oder es kann sich um mehrere Computer handeln, die miteinander vernetzt sind. Dabei sind die Begriffe Computer und Computersystem breit zu verstehen. Beispiele für Computer und Computersysteme sind TabletComputer, Notebook-Computer und andere mobile Rechensysteme und Smartphones sowie auch Multiprozessorsysteme, Mikroprozessor-basierende Systeme, programmierbare Consumer-Elektronik und auch Digitalkameras und PDAs (Personal Digital Assistent).

Üblicherweise liegt ein Computerprogramm vor, das in den Arbeitsspeicher eines Computersystems geladen werden kann und dann ein oder mehrere Schritte des erfindungsgemäßen Verfahrens ausführt. Das Computerprogramm ist üblicherweise auf einem Datenträger gespeichert und als Computerprogrammprodukt kommerziell erhältlich. Das Computerprogrammprodukt kann z.B. in Form einer Compact Disk (CD) einer Digital Versatile Disc (DVD), eines USB-Speichersticks (USB = Universal Serial Bus) oder als Download angeboten werden.

Das erfindungsgemäße Computerprogramm veranlasst das Computersystem zur Ausführung der folgenden Schritte:
- Empfangen mindestens eines Vorschlags für eine zu identifizierende Spezies, deren Anwesenheit von mindestens einem Sensor in einem Feld für Kulturpflanzen detektiert worden ist,
- Empfangen des Standorts des mindestens einen Sensors und/oder des Ortes, an dem sich die detektierte Spezies zum Zeitpunkt der Detektion aufgehalten hat,
- Berechnen der Wahrscheinlichkeit, dass es sich bei der detektierten Spezies um die vorgeschlagene Spezies handelt, wobei zur Berechnung der Wahrscheinlichkeit ein Modell verwendet wird, in das der Standort des Sensors und/oder Ort der detektierten Spezies einfließt.

Ein weiterer Gegenstand der vorliegenden Erfindung ist ein System umfassend
- mindestens einen Sensor zur Erfassung der Anwesenheit einer zu identifizierenden Spezies in einem Feld für Kulturpflanzen,
- Mittel zur Generierung eines Vorschlags für die mit dem mindestens einen Sensor erfassten Spezies,
- Mittel zur Ermittlung des Standorts des mindestens einen Sensors und/oder des Orts, an dem sich eine Spezies zum Zeitpunkt ihrer Erfassung mit dem mindestens einen Sensor aufgehalten hat,
- ein Computersystem, das so konfiguriert ist, dass es eine Wahrscheinlichkeit berechnet, dass es sich bei der detektierten Spezies um die vorgeschlagene Spezies handelt, wobei zur Berechnung der Wahrscheinlichkeit ein Modell verwendet wird, in das der Standort des Sensors und/oder Ort der detektierten Spezies und der Zeitpunkt der Detektion einfließen.

Vorzugsweise weist das System Mittel auf, um Speziesvorschläge und/oder berechnete Wahrscheinlichkeiten und/oder Handlungsempfehlungen gegenüber einem Nutzer anzuzeigen.

In einer bevorzugten Ausführungsform ist der Sensor mit einem ersten Computersystem verbunden. Mit dem Sensor werden je nach Sensor-Typ elektromagnetische, akustische, chemische und/oder andere Signale erfasst und üblicherweise in elektrische Signale umgewandelt. Mit dem ersten Computersystem werden die elektrischen Signale analysiert und interpretiert. Üblicherweise werden sie dazu zunächst digitalisiert. Denkbar ist aber auch eine Verarbeitung, Analyse und Interpretation von analogen Signalen.

Vorzugsweise ist das erste Computersystem so ausgeführt, dass es anhand der elektrischen Signale mindestens einen Vorschlag generiert, um welche Spezies es sich bei der detektierten, zu identifizierenden Spezies handeln könnte.

Vorzugsweise sind der Spezies-Sensor und das erste Computersystem Bestandteile derselben Vorrichtung, die stationär im, am oder über dem Feld positioniert ist oder mobil innerhalb oder oberhalb des Feldes bewegt werden kann. Vorzugsweise gehören auch ein GPS-Sensor (zur Ermittlung des Detektionsortes) und/oder ein Zeitmesser (Uhr, zur Ermittlung des Detektionszeitpunkts) zu dieser Vorrichtung. Vorzugsweise ist das erste Computersystem so ausgeführt, dass es die Position der Vorrichtung mittels GPS-Sensor bestimmen kann.

In einer bevorzugten Ausführungsform übermittelt das erste Computersystem die generierten Spezies-Vorschläge zusammen mit der Orts- und Zeitinformation an ein zweites Computersystem, das sich vorzugsweise nicht im Feld befindet und das vorzugsweise stationär ist. Auf dem zweiten Computersystem ist ein Prognosemodell installiert, das anhand der übermittelten Daten die Wahrscheinlichkeiten berechnen kann, mit denen die vorgeschlagenen Spezies in dem Feld auftreten. Vorzugsweise verwendet das Prognosemodell weitere Parameter, die einen Einfluss auf die Anwesenheit der vorgeschlagenen Spezies in dem Feld ausüben (siehe oben).

Vorzugsweise übermittelt das zweite Computersystem die berechneten Wahrscheinlichkeiten zum ersten Computersystem. Die berechneten Wahrscheinlichkeiten können einem Nutzer auf dem ersten und/oder zweiten Computersystem angezeigt werden. Vorzugsweise werden einem Nutzer neben den Wahrscheinlichkeiten Handlungsempfehlungen angezeigt.

## Patentansprüche

1. Verfahren umfassend die Schritte:
- Detektieren einer zu identifizierenden Spezies mit einem Sensor in einem Feld, in dem Kulturpflanzen angebaut werden,
- Generieren von mindestens einem Speziesvorschlag für die detektierte, zu identifizierende Spezies,
- Ermitteln des Standorts des Sensors und/oder der detektierten, zu identifizierenden Spezies,
**gekennzeichnet durch** den folgenden Schritt:
- Berechnen der Wahrscheinlichkeit des Auftretens des mindestens einen Speziesvorschlags in dem Feld mit Hilfe eines Modells, in das der Standort des Sensors und/oder der detektierten, zu identifizierenden Spezies und der Zeitpunkt der Detektion sowie einer oder mehrere der folgenden Parameter einfließen: Temperatur, Sonnenscheindauer, Windgeschwindigkeit, Niederschlag, Entwicklungsstadium der Kulturpflanze, bereits getätigte Pflanzenschutzmaßnahmen.

2. Verfahren nach Anspruch 1, wobei es sich bei der zu identifizierenden Spezies um einen Schadorganismus handelt.

3. Verfahren nach Anspruch 2, wobei es sich bei der zu identifizierenden Spezies um einen Krankheitserreger handelt, dessen Anwesenheit indirekt erfasst wird.

4. Verfahren nach Anspruch 2, wobei es sich bei der zu identifizierenden Spezies um einen tierischen Schädling handelt, dessen Anwesenheit direkt erfasst wird.

5. Verfahren nach einem der Ansprüche 1 bis 4, **dadurch gekennzeichnet, dass** der Sensor an einer Landmaschine angebracht ist und Signale aufnimmt, wenn sich die Landmaschine im Feld bewegt.

6. Verfahren nach einem der Ansprüche 1 bis 5, **dadurch gekennzeichnet dass** es sich bei dem Sensor um einen Sensor für elektromagnetische Strahlung handelt.

7. Verfahren nach einem der Ansprüche 1 bis 6, **dadurch gekennzeichnet dass** es sich bei dem Sensor um einen bildgebenden Sensor handelt.

8. Verfahren nach einem der Ansprüche 1 bis 7, **dadurch gekennzeichnet, dass** es sich bei dem Sensor um einen LiDAR-Sensor, einen Hyperspektral-Sensor, einen RGB-Sensor und/oder einen Thermografie-Sensor handelt.

9. Verfahren nach einem der Ansprüche 1 bis 8, **dadurch gekennzeichnet, dass** der mindestens eine Speziesvorschlag zusammen mit der Wahrscheinlichkeit, dass es sich bei der detektierten Spezies um den Speziesvorschlag handelt, einem Nutzer gegenüber angezeigt wird.

10. Verfahren nach einem der Ansprüche 1 bis 8, **dadurch gekennzeichnet, dass** diejenigen Speziesvorschläge einem Nutzer angezeigt werden, bei denen die berechnete Wahrscheinlichkeit oberhalb einer Mindestwahrscheinlichkeit liegt.

11. Verfahren nach einem der Ansprüche 1 bis 10, **dadurch gekennzeichnet, dass** ein Speziesvorschlag zusammen mit einer Handlungsempfehlung angezeigt wird, beispielsweise wie die Spezies bekämpft werden kann falls es sich bei der Spezies um einen Schadorganismus handelt.

12. Verfahren nach einem der Ansprüche 1 bis 11, **dadurch gekennzeichnet, dass** der Sensor Teil eines selbstlernenden Systems ist und die berechnete Wahrscheinlichkeit dazu verwendet wird, die Vorhersagefähigkeit des Systems zu verbessern.

13. Computerprogrammprodukt umfassend einen Datenträger, auf dem ein Computerprogramm gespeichert ist, das in den Arbeitsspeicher eines Computers geladen werden kann und das Computersystem dazu veranlasst, die folgenden Schritte auszuführen:
- Empfangen mindestens eines Vorschlags für eine zu identifizierende Spezies, deren Anwesenheit von mindestens einem Sensor in einem Feld für Kulturpflanzen detektiert worden ist,
- Empfangen des Standorts des mindestens einen Sensors und/oder des Ortes, an dem sich die detektierte Spezies zum Zeitpunkt der Detektion aufgehalten hat,
**gekennzeichnet durch** den folgenden Schritt:
- Berechnen der Wahrscheinlichkeit, dass es sich bei der detektierten Spezies um die vorgeschlagene Spezies handelt, wobei zur Berechnung der Wahrscheinlichkeit ein Modell verwendet wird, in das der Standort des Sensors und/oder Ort der detektierten Spezies und der Zeitpunkt der Detektion sowie einer oder mehrere der folgenden Parameter einfließen: Temperatur, Sonnenscheindauer, Windgeschwindigkeit, Niederschlag, Entwicklungsstadium der Kulturpflanze, bereits getätigte Pflanzenschutzmaßnahmen.

14. System umfassend
- mindestens einen Sensor zur Detektion der Anwesenheit einer zu identifizierenden Spezies in einem Feld für Kulturpflanzen,
- Mittel zur Generierung eines Vorschlags für die mit dem mindestens einen Sensor detektierten Spezies,
- Mittel zur Ermittlung des Standorts des mindestens einen Sensors und/oder des Orts, an dem sich eine Spezies zum Zeitpunkt ihrer Detektion mit dem mindestens einen Sensor aufgehalten hat,
**dadurch gekennzeichnet, dass**
ein Computersystem vorgesehen ist, das so konfiguriert ist, dass es eine Wahrscheinlichkeit berechnet, dass es sich bei der detektierten Spezies um die vorgeschlagene Spezies handelt, wobei zur Berechnung der Wahrscheinlichkeit ein Modell verwendet wird, in das der Standort des Sensors und/oder Ort der detektierten Spezies und der Zeitpunkt der Detektion sowie einer oder mehrere der folgenden Parameter einfließen: Temperatur, Sonnenscheindauer, Windgeschwindigkeit, Niederschlag, Entwicklungsstadium der Kulturpflanze, bereits getätigte Pflanzenschutzmaßnahmen.

15. System nach Anspruch 14, umfassend ein erstes Computersystem und ein zweites Computersystem, wobei das erste Computersystem mit dem mindestens einen Sensor verbunden ist und so hergerichtet ist, dass es anhand der von dem mindestens einen Sensor erfassten Signale mindestens einen Spezies-Vorschlag generiert und den mindestens einen Spezies-Vorschlag vorzugsweise zusammen mit den Informationen zum Detektionsort und/oder dem Detektionszeitpunkt an das zweite Computersystem übermittelt,
wobei das zweite Computersystem über mindestens ein Prognosemodell verfügt und so hergerichtet ist, dass es den mindestens einen Spezies-Vorschlag und vorzugsweise Informationen zum Detektionsort und/oder dem Detektionszeitpunkt in Empfang nehmen und anhand des mindestens einen Prognosemodells die jeweilige Wahrscheinlichkeit berechnen kann, dass es sich bei einer vorgeschlagenen Spezies um die detektierte Spezies handelt, wobei das zweite Computersystem vorzugsweise so hergerichtet ist, dass es die jeweilige berechnete Wahrscheinlichkeit einem Nutzer gegenüber anzeigen und/oder an das erste Computersystem übermitteln und/oder einem Nutzer gegenüber eine Handlungsempfehlung anzeigen kann, und wobei das erste Computersystem vorzugsweise so hergerichtet ist, dass es die jeweilige berechnete Handlungsempfehlung von dem zweiten Computersystem empfangen und vorzugsweise gegenüber einem Nutzer vorzugsweise zusammen mit Handlungsempfehlungen anzeigen kann und/oder dazu verwenden kann, die Generierung von Spezies-Vorschlägen zu verbessern.

## Claims

1. A method comprising the steps of:
- detecting a species to be identified with a sensor in a field in which crop plants are cultivated,
- generating at least one species suggestion for the detected species to be identified,
- determining the location of the sensor and/or the detected species to be identified,
**characterized by** the following step:
- calculating the probability of occurrence of the at least one species suggestion in the field using a model in which the location of the sensor and/or the detected species to be identified and the time of detection and also one or more of the following parameters are included: temperature, sunshine duration, wind speed, precipitation, development stage of the crop plant, plant protection measures already carried out.

2. The method according to claim 1, wherein the species to be identified is a harmful organism.

3. The method according to claim 2, wherein the species to be identified is a pathogen whose presence is indirectly detected.

4. The method according to claim 2, wherein the species to be identified is an animal pest whose presence is directly detected.

5. The method according to one of claims 1 to 4, wherein the sensor is attached to an agricultural machine and receives signals when the agricultural machine moves in the field.

6. The method according to one of claims 1 to 5, wherein the sensor is a sensor for electromagnetic radiation.

7. The method according to one of claims 1 to 6, wherein the sensor is an imaging sensor.

8. The method according to one of claims 1 to 7, wherein the sensor is a LiDAR sensor, a hyperspectral sensor, an RGB sensor and/or a thermography sensor.

9. The method according to one of claims 1 to 8, wherein the at least one species suggestion, together with the probability that the detected species is the species suggestion, is indicated to a user.

10. The method according to one of claims 1 to 8, wherein those species suggestions for which the calculated probability lies above a minimum probability are indicated to a user.

11. The method according to one of claims 1 to 10, wherein a species suggestion is indicated together with a recommendation for action, for example as to how the species can be controlled if said species is a harmful organism.

12. The method according to one of claims 1 to 11, wherein the sensor is part of a self-learning system and the calculated probability is used to improve the predictive capacity of the system.

13. A computer program product comprising a data carrier on which a computer program is stored, which can be loaded into the working memory of a computer and causes the computer system to carry out the following steps:
- receiving at least one suggestion for a species to be identified whose presence has been detected by at least one sensor in a field for crop plants,
- receiving the location of the at least one sensor and/or the site at which the detected species was located at the time of detection,
**characterized by** the following step:
- calculating the probability that the detected species is the suggested species, wherein a model is used for calculating the probability, in which the location of the sensor and/or site of the detected species and the time of detection and also one or more of the following parameters are included: temperature, sunshine duration, wind speed, precipitation, development stage of the crop plant, plant protection measures already carried out.

14. A system comprising
- at least one sensor for detecting the presence of a species to be identified in a field for crop plants,
- means for generating a suggestion for the species detected by the at least one sensor,
- means for determining the location of the at least one sensor and/or the site at which a species was located at the time of its detection by the at least one sensor, **characterized in that**
a computer system is provided that is configured to calculate a probability that the detected species is the suggested species, wherein a model is used for calculating the probability, in which the location of the sensor and/or site of the detected species and the time of detection and also one or more of the following parameters are included: temperature, sunshine duration, wind speed, precipitation, development stage of the crop plant, plant protection measures already carried out.

15. The system according to claim 14, comprising a first computer system and a second computer system, wherein the first computer system is connected to the at least one sensor and is configured such that it generates at least one species suggestion on the basis of the signals detected by the at least one sensor and transmits the at least one species suggestion, preferably together with the information on the detection site and/or the detection time, to the second computer system,
wherein the second computer system has at least one prediction model and is configured such that it can receive the at least one species suggestion, and preferably information on the detection site and/or the detection time, and, based on the at least one prediction model, can calculate the respective probability that a suggested species is the detected species,
wherein the second computer system is preferably configured such that it can indicate the respective calculated probability to a user and/or transmit it to the first computer system and/or indicate to a user a recommendation for action, and
wherein the first computer system is preferably configured such that it can receive the respective calculated recommendation for action from the second computer system and preferably indicate it to a user, preferably together with recommendations for action, and/or can use it to improve the generation of species suggestions.

## Revendications

1. Procédé comprenant les étapes suivantes :
- détecter une espèce à identifier à l'aide d'un capteur dans un champ dans lequel des plantes sont cultivées,
- générer au moins une proposition pour l'espèce détectée à identifier,
- déterminer l'emplacement du capteur et/ou de l'espèce détectée à identifier,
**caractérisé par** les étapes suivantes :
- calculer la probabilité d'occurrence de l'au moins une espèce proposée dans le champ à l'aide d'un modèle dans lequel sont inclus l'emplacement du capteur et/ou de l'espèce détectée à identifier et l'instant de la détection ainsi qu'un ou plusieurs des paramètres suivants : la température, la durée d'ensoleillement, la vitesse du vent, les précipitations, le stade de développement de la plante cultivée, les mesures phytosanitaires déjà prises.

2. Procédé selon la revendication 1, l'espèce à identifier étant un organisme nuisible.

3. Procédé selon la revendication 2, l'espèce à identifier étant un pathogène dont la présence est détectée indirectement.

4. Procédé selon la revendication 2, l'espèce à identifier étant un animal nuisible dont la présence est détectée directement.

5. Procédé selon l'une des revendications 1 à 4, **caractérisé en ce que** le capteur est fixé à une machine agricole et reçoit des signaux lorsque la machine agricole se déplace dans le champ.

6. Procédé selon l'une des revendications 1 à 5, **caractérisé en ce que** le capteur est un capteur de rayonnement électromagnétique.

7. Procédé selon l'une des revendications 1 à 6, **caractérisé en ce que** le capteur est un capteur d'imagerie.

8. Procédé selon l'une des revendications 1 à 7, **caractérisé en ce que** le capteur est un capteur LiDAR, un capteur hyperspectral, un capteur RVB et/ou un capteur thermographique.

9. Procédé selon l'une des revendications 1 à 8, **caractérisé en ce que** l'au moins une proposition d'espèce est présentée à un utilisateur conjointement avec la probabilité que l'espèce détectée soit la proposition d'espèce.

10. Procédé selon l'une des revendications 1 à 8, **caractérisé en ce que** les propositions d'espèces, pour lesquelles la probabilité calculée est supérieure à une probabilité minimale, sont présentées à un utilisateur.

11. Procédé selon l'une des revendications 1 à 10, **caractérisé en ce qu'**une proposition d'espèce est présentée avec une recommandation d'action, par exemple sur la manière de lutter contre l'espèce si l'espèce est un organisme nuisible.

12. Procédé selon l'une des revendications 1 à 11, **caractérisé en ce que** le capteur fait partie d'un système d'auto-apprentissage et la probabilité calculée est utilisée pour améliorer la capacité prédictive du système.

13. Progiciel comprenant un support de données sur lequel est mémorisé un logiciel qui peut être chargé dans la mémoire de travail d'un ordinateur et qui ordonne au système informatique d'exécuter les étapes suivantes :
- recevoir au moins une proposition d'espèce à identifier dont la présence a été détectée par au moins un capteur dans un champ de plantes cultivées,
- recevoir l'emplacement de l'au moins un capteur et/ou l'emplacement où se trouvait l'espèce détectée à l'instant de la détection,
**caractérisé par** l'étape suivante :
- calculer la probabilité que l'espèce détectée soit l'espèce proposée, un modèle étant utilisé pour calculer la probabilité, modèle dans lequel sont inclus l'emplacement du capteur et/ou l'emplacement de l'espèce détectée et l'instant de la détection ainsi qu'un ou plusieurs des paramètres suivants : la température, la durée d'ensoleillement, la vitesse du vent, les précipitations, le stade de développement de la culture, les mesures phytosanitaires déjà prises.

14. Système comprenant
- au moins un capteur destiné à détecter la présence d'une espèce à identifier dans un champ de plantes cultivées,
- des moyens destinés à générer une proposition pour l'espèce détectée à l'aide de l'au moins un capteur,
- des moyens destinés à déterminer l'emplacement de l'au moins un capteur et/ou de l'emplacement où une espèce se trouvait à l'instant de sa détection à l'aide de l'au moins un capteur,
**caractérisé en ce que**
un système informatique est prévu qui est conçu pour calculer une probabilité que l'espèce détectée soit l'espèce proposée, un modèle étant utilisé pour calculer la probabilité, modèle dans lequel sont inclus l'emplacement du capteur et/ou l'emplacement de l'espèce détectée et l'instant de la détection ainsi qu'un ou plusieurs des paramètres suivants : la température, la durée d'ensoleillement, la vitesse du vent, les précipitations, le stade de développement de la culture, les mesures phytosanitaires déjà prises.

15. Système selon la revendication 14 comprenant un premier système informatique et un deuxième système informatique,
le premier système informatique étant relié à l'au moins un capteur et étant conçu de façon à générer au moins une proposition d'espèce sur la base des signaux détectés par l'au moins un capteur et l'au moins une proposition d'espèce étant transmise au deuxième système informatique de préférence conjointement avec les informations sur l'emplacement de détection et/ou l'instant de la détection,
le deuxième système informatique comportant au moins un modèle de pronostic et étant conçu de façon à pouvoir recevoir l'au moins une proposition d'espèce et de préférence des informations sur l'emplacement de détection et/ou l'instant de détection et à pouvoir calculer sur la base de l'au moins un modèle de pronostic la probabilité respective qu'une espèce proposée soit l'espèce détectée,
le deuxième système informatique étant de préférence conçu de façon à pouvoir présenter la probabilité calculée respective à un utilisateur et/ou la transmettre au premier système informatique et/ou la présenter à un utilisateur quant à une recommandation d'action, et
le premier système informatique étant de préférence conçu de façon à pouvoir recevoir la recommandation d'action calculée respective du deuxième système informatique et de préférence à la présenter à un utilisateur, de préférence conjointement avec les recommandations d'action, et/ou à l'utiliser pour améliorer la génération de propositions d'espèces.
